# Europäisches Patentamt
# European Patent Office
# Office européen des brevets

(11) Numéro de publication: **0 061 366**
**B1**

(12) **FASCICULE DE BREVET EUROPEEN**

(45) Date de publication du fascicule du brevet: **12.12.84**

(51) Int. Cl.³: **G 06 F 7/62, G 01 F 9/00**

(21) Numéro de dépôt: **82400287.7**

(22) Date de dépôt: **18.02.82**

(54) **Dispositif de calcul du rapport de deux fréquences représentatives de deux grandeurs physiques.**

(30) Priorité: **12.03.81 FR 8104991**

(43) Date de publication de la demande:
**29.09.82 Bulletin 82/39**

(45) Mention de la délivrance du brevet:
**12.12.84 Bulletin 84/50**

(84) Etats contractants désignés:
**DE GB IT**

(56) Documents cités:
**FR-A-2 229 094**
**FR-A-2 285 023**
**US-A-3 892 952**

**IEEE TRANSACTIONS ON INDUSTRIAL ELECTRONICS AND CONTROL INSTRUMENTATION, vol. IECI-24, no. 1, février 1977, NEW YORK (US), E.W. OWEN: "Digital processing of differential transducer signals", pages 85-91**

(73) Titulaire: **e.d. VEGLIA**
**125, rue de Montreuil**
**F-75540 Paris Cedex 11 (FR)**

(72) Inventeur: **Dubuisson, Georges**
**6 Clos de Maule**
**F-78630 Orgeval (FR)**

(74) Mandataire: **Bloch, Robert et al**
**39 avenue de Friedland**
**F-75008 Paris (FR)**

Courier Press, Leamington Spa, England.

## Description

La présente invention concerne un dispositif pour calculer le rapport entre deux fréquences représentatives de deux grandeurs physiques, en particulier une consommation de carburant et une distance, notamment pour véhicule automobile, comprenant deux capteurs sensibles à ces grandeurs et délivrant respectivement deux signaux dont le rapport des fréquences est à calculer, et des moyens de calcul connectés aux deux capteurs.

On utilise généralement comme moyens de calcul un microprocesseur. Lorsqu'il s'agit de calculer la consommation d'essence kilométrique d'une voiture, on ne peut utiliser pour des raisons de coût, qu'un microprocesseur peu performant. Alors, les fréquences maximales d'entrée ne peuvent dépasser quelques dizaines de hertz à cause des calculs internes à effectuer. Or les capteurs utilisés pour saisir les informations de consommation d'essence et de distance peuvent très bien délivrer des signaux dont la fréquence est beaucoup plus grande que celle admissible par le microprocesseur (plusieurs centaines de hertz). En outre, les microprocesseurs a priori disponibles pour ce genre d'application ne possèdent que peu d'entrées, et il peut s'agir alors d'une contrainte connexe.

La solution consistant à diviser les fréquences issues des capteurs pourrait paraître a priori satisfaisante. En fait, il n'en est rien car le résultat obtenu ne l'est pas avec suffisamment de précision, car la période du signal d'entrée de ces diviseurs est beaucoup plus petite que la période du signal de sortie, qui est une multiple de celle-là. Si, de plus, le microprocesseur, dans ses organes de saisie des informations délivrées par les diviseurs de fréquence, était synchronisé, il ne pourrait l'être que sur un seul des deux signaux délivrés par les deux diviseurs. L'information résultante délivrée par le microprocesseur resterait entachée d'erreur.

La présente invention vise donc à résoudre le problème défini ci-dessus.

A cet effet, la présente invention concerne un dispositif pour calculer le rapport entre deux fréquences de deux signaux, comprenant deux diviseurs de fréquence recevant respectivement les deux signaux et connectés à des moyens de calcul connus en soi, pour effectuer le dit rapport et comprenant des moyens pour déterminer sans erreur la fréquence du signal d'entrée de l'un des deux diviseurs à partir de son signal de sortie, dispositif caractérisé par le fait qu'il est prévu d'autres moyens connectés entre les dits moyens de détermination et l'autre des deux diviseurs, pour déterminer la fréquence du signal d'entrée de cet autre diviseur.

Dans une forme de réalisation préférée du dispositif de l'invention, les dits moyens de détermination sont synchronisés sur le signal de sortie du dit un diviseur, et les dits autres moyens de détermination de la fréquence du signal d'entrée du dit autre diviseur comprennent des moyens pour déterminer le déphasage du signal d'entrée de cet autre diviseur.

Dans ce cas, ces derniers peuvent comprendre une horloge et une porte connectée, à la sortie, à l'entrée du dit autre diviseur et recevant, à l'entrée, ce signal d'horloge et le signal de fréquence à déterminer associé au dit autre diviseur.

L'invention sera mieux comprise à l'aide de la description suivante de deux formes de réalisation de l'invention, en référence au dessin annexé, sur lequel:

La fig. 1 représente un bloc diagramme schématique d'une première forme de réalisation de l'invention, et

La fig. 2 représente un bloc diagramme schématique d'une deuxième forme de réalisation de l'invention.

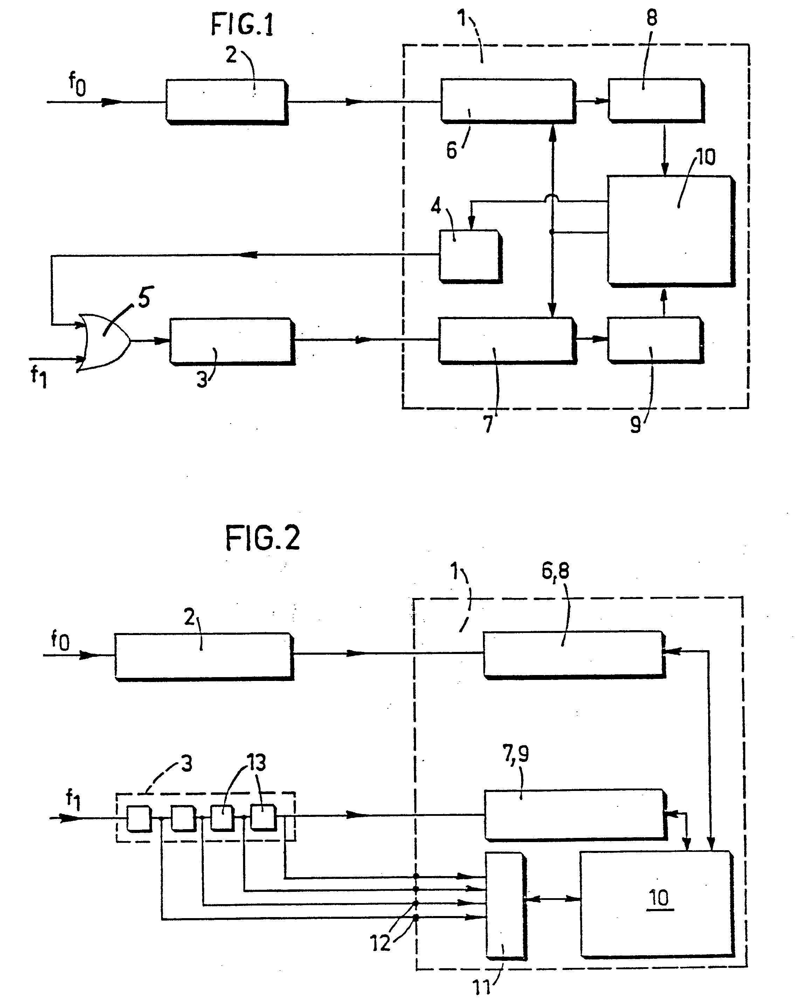

Le dispositif représenté sur la fig. 1 est destiné à calculer la consommation kilométrique de carburant d'un véhicule à combustion interne, et plus particulièrement la consommation d'essence d'une voiture. Il comporte essentiellement un calculateur, ou microprocesseur, 1, un premier diviseur de fréquence 2 et un second diviseur de fréquence 3 connectés au microprocesseur 1.

Le diviseur 2 reçoit un signal impulsionnel de fréquence f0, représentatif de la quantité d'essence récente consommée, fourni, par exemple, par un débitmètre non représenté. La notion de "quantité récente" sera éclaircie plus loin. Le diviseur 3 reçoit un autre signal impulsionnel, de fréquence f1, représentatif de la distance parcourue pendant laquelle la quantité récente a été consommée, fourni, par exemple, par un capteur à reluctance variable.

Le calcul du rapport de fréquences

$$\frac{f0}{f1}$$

devrait normalement permettre de connaître la consommation kilométrique récente recherchée.

Or le microprocesseur, qui est installé à bord de la voiture, est un appareil relativement peu sophistiqué, dont les capacités sont limitées, notamment en fréquences. C'est ainsi qu'il ne peut recevoir que des fréquences ne dépassant pas environ 50 Hz. Comme par ailleurs, le débitmètre et le capteur de distance délivrent des signaux dont la fréquence peut atteindre environ 400 Hz, les deux compteurs diviseurs 2 et 3 ont été respectivement connectés entre le débitmètre et le capteur de distance, d'une part, et le microprocesseur 1, d'autre part.

Ces deux diviseurs comprennent avantageusement chacun un groupe de bascules connectées en série, n bascules pour diviser la fréquence par $2^n$.

Le dispositif de calcul tel que décrit jusqu'ici ne permettrait pas de fournir la consommation kilométrique sans erreur.

En effet, à cause de la division de fréquence, pendant qu'il sort deux impulsions de diviseurs 2 ou 3, il en rentre bien davantage, en l'occurrence $2^n$ fois plus. Et les impulsions entrées dans un diviseur, entre le moment de scrutation du microprocesseur et l'impulsion de sortie du diviseur considéré précédant ce moment de scrutation, ne seraient pas prises en compte par le microprocesseur. Même si la scrutation du microprocesseur s'effectuait en phase avec les impulsions de sortie, et donc avec les impulsions d'entrée, de l'un des deux diviseurs, cette scrutation resterait déphasée par rapport aux impulsions de l'autre diviseur et l'imprécision de calcul subsisterait.

En conséquence, le dispositif comporte une horloge 4, intégrée dans le microprocesseur 1, et une porte OU 5, connectée, à la sortie, à l'entrée du diviseur 3 et, à l'entrée, à la sortie de l'horloge 4 et à la sortie du capteur de distance fournissant les impulsions à fréquence f1.

Le microprocesseur 1 comporte un premier et un deuxième compteur 6 et 7, comprenant chacun un groupe de bascules connectées en série, recevant en permanence respectivement les impulsions de sortie des diviseurs 2 et 3, qui eux-mêmes reçoivent en permanence les impulsions de sortie du débitmètre et du capteur de distance. Les états des compteurs 6 et 7 sont vidés respectivement dans deux mémoires volatiles 8 et 9 du microprocesseur, à partir d'un ordre de lecture, ou de scrutation, émanant du microprocesseur. Une mémoire et le compteur associé forment un registre.

La scrutation s'effectue pendant un temps déterminé relativement court, par exemple une seconde, augmenté du temps d'apparition de l'impulsion suivante, par exemple sur le compteur 6. C'est dans ce sens qu'on parle, de façon classique, de la consommation récente, par opposition à la consommation instantanée et à la consommation moyenne. En outre, la scrutation s'effectue en phase avec les impulsions de sortie du diviseur 2 arrivant sur le compteur 6, la première d'entre elles étant l'impulsion de synchronisation. L'information relative aux impulsions à fréquence f0 arrivant sur le compteur 6, c'est-à-dire l'information de consommation, est donc connue sans erreur.

Il faut noter ici que toutes les fonctions classiques remplies par le microprocesseur, aussi bien celles qui ont été évoquées plus haut que celles qui seront absordées plus loin, sont exercées par des moyens de calcul, ou de détermination, connus représentés en 10, sur la fig. 1, et connectées aux compteurs 6, 7, aux mémoires 8, 9 et à l'horloge 4.

Abordons maintenant le fonctionnement du dispositif qui va permettre de connaître la distance, c'est-à-dire l'information relative aux impulsions à fréquence f1 arrivant sur le compteur 7, également sans erreur.

Le diviseur 3 divisant la fréquence des impulsions qu'il reçoit par le nombre $2^{n1}$, l'horloge 4, à l'ordre de lecture en provenance des moyens 10 et synchrone avec l'impulsion sortant du diviseur 2, envoie sur l'une des entrées de la porte OU 5 un train de $2^{n1}$ impulsions à une fréquence très grande par rapport au produit de f1 par $2^{n1}$, étant entendu qu'à ce moment-là, l'état du compteur 7 a été vidé dans la mémoire 9. $2^{n1}$ est le nombre d'impulsions d'entrée arrivant sur le diviseur 3 pendant le temps s'écoulant entre deux impulsions de sortie. Dès qu'une nouvelle impulsion sort du diviseur 3, on peut en déduire le nombre d'impulsions d'entrée qui sont arrivées sur le diviseur 3 et qui n'auraient pas été prises en compte, en retranchant de $2^{n1}$ le nombre d'impulsions émises par l'horloge 4, et donc connu, pour provoquer la sortie d'une nouvelle impulsion du diviseur 3. Ainsi, si le diviseur 3 comporte quatre bascules (nl=4), que l'horloge envoie un train de 16 ($2^4$) impulsions, et qu'il faut 13 de ces impulsions pour provoquer la sortie d'une nouvelle impulsion, on en déduit que trois (16—13) impulsions supplémentaires à fréquence f1 doivent être prises en compte pour connaître la distance sans erreur.

Il faut noter qu'après la sortie de cette nouvelle impulsion du diviseur 3, l'horloge a continué d'envoyer 3 impulsions sur le diviseur, soit autant que celles qui sinon n'auraient pas été prises en compte. En d'autres termes, le diviseur 3 retrouve son contenu initial sans perte d'une seule impulsion d'entrée, ce qui offre la possibilité de calculer des consommations et vitesses moyennes.

La grande fréquence à laquelle l'horloge 4 envoie son train d'impulsions ne vise qu'à permettre une mesure exacte, qui sinon serait troublée par l'arrivée des nouvelles impulsions à l'entrée du diviseur 3.

Le dispositif représenté sur la fig. 2 se distingue de celui de la fig. 1 essentiellement par le fait que le microprocesseur comporte un registre supplémentaire et un plus grand nombre d'entrées. Les mêmes éléments étant désignés par les mêmes références, le dispositif de la fig. 2 comporte encore un diviseur de consommation 2, un diviseur de distance 3, dans le microprocesseur 1, un registre de consommation 6, 8 et un registre de distance 7, 9. Il ne comporte plus d'horloge de consommation, permettant finalement d'appréhender le déphasage des impulsions à fréquence f1 non synchronisées. Par contre, il comporte un troisième registre 11 et au moins autant d'entrées 12 que le compteur 3 comporte de bascules 13, dont les sorties respectives sont connectées par ces entrées 12 au registre 11.

La scrutation des deux registres 6, 8 et 7, 9 s'effectue simultanément et l'état des diverses bascules 13 du diviseur 3 est vidé dans le registre tampon ou supplémentaire 11, connectée de la même manière que précédemment aux moyens de calcul ou de détermination 10. Ainsi, on obtient, différemment, le même résultat qu'avec le dispositif de la fig. 1, en introduisant dans le registre 11 du microprocesseur 1 l'information du nombre d'impulsions arrivant sur le diviseur 3.

## Revendications

1. Dispositif pour calculer le rapport entre deux fréquences de deux signaux, comprenant deux diviseurs de fréquence (2, 3) recevant respectivement les deux signaux et connectés à des moyens de calcul (1) connus en soi, pour effectuer le dit rapport et comprenant des moyens (10) pour déterminer sans erreur la fréquence du signal d'entrée de l'un (2) des deux diviseurs à partir de son signal de sortie, dispositif caractérisé par le fait qu'il est prévu d'autres moyens (4, 5) connectés entre les dits moyens de détermination (10) et l'autre (3) des deux diviseurs, pour déterminer la fréquence du signal d'entrée de cet autre diviseur (3).

2. Dispositif selon la revendication 1, dans lequel les dits moyens de détermination (10) sont synchronisés sur le signal de sortie du dit un diviseur (2), et les dits autres moyens de détermination (4, 5), de la fréquence du signal d'entrée du dit autre diviseur (3) comprennent des moyens (4) pour déterminer le déphasage du signal d'entrée de cet autre diviseur (3).

3. Dispositif selon la revendication 2, dans lequel les dits autres moyens de détermination (4, 5) comprennent une horloge (4) et une porte (5) connectée, à la sortie, à l'entrée du dit autre diviseur (3) et recevant, à l'entrée, le signal de l'horloge (4) et le signal de fréquence à déterminer associé au dit autre diviseur (3).

4. Dispositif selon la revendication 3, dans lequel l'horloge (4) est intégrée aux dits moyens de calcul (1).

5. Dispositif selon la revendication 1, dans lequel le dit autre diviseur (3) comporte un groupe de bascules (13) connectées en série, et dont les sorties respectives sont connectées par des entrées (12) des dits moyens de calcul (1) à un registre tampon (11) connecté aux dits moyens de détermination (10).

6. Dispositif selon l'une des revendications 1 à 5, dans lequel les signaux de sortie des deux diviseurs (2, 3) sont reçus respectivement dans deux registres composés chacun d'un compteur (6, 7) et d'une mémoire volatile (8, 9).

7. Dispositif selon l'une des revendications 1 à 6, dans lequel les dits moyens de calcul comprennent un microprocesseur (1).

8. Dispositif selon l'une des revendications 1 à 7, dans lequel les fréquences des dits signaux d'entrée des dits diviseurs (2, 3) sont représentatives d'une consommation d'essence et d'une distance parcourue, respectivement.

## Patentansprüche

1. Anordnung zum Berechnen des Verhältnisses zwischen zwei Frequenzen zweier Signale, aufweisend zwei Frequenzteiler (2, 3), die jeweils eines der beiden Signale empfangen und die mit an sich bekannten Rechnermitteln verbunden sind, um das genannte Verhältnis zu berechnen und enthaltend Mittel (10) zur fehlerfreien Bestimmung der Frequenz des Eingangssignals eines (2) der beiden Teiler, ausgehend von seinem Ausgangssignal, dadurch gekennzeichnet, daß andere Mittel (4, 5) vorgesehen sind, die zwischen den genannten Bestimmungsmitteln (10) und den anderen (3) der beiden Teiler geschaltet sind, um die Frequenz des Eingangssignals dieses anderen Teilers (3) zu bestimmen.

2. Anordnung nach Anspruch 1, in der die genannten Bestimmungsmittel (10) auf das Ausgangssignal des genannten einen Teilers (2) synchronisiert sind und die genannten anderen Bestimmungsmittel (4, 5) der Frequenz des Eingangssignals des genannten anderen Teilers (3) Mittel (4) enthalten, um die Phasenverschiebung des Eingangssignals dieses anderen Teilers (3) zu bestimmen.

3. Anordnung gemäß Anspruch 2, in der die genannten anderen Bestimmungsmittel (4, 5) einen taktgeber (4) und ein Gatter (5) aufweisen, ausgangsseitig mit dem Eingang des genannten anderen Teilers (3) verbundend und eingangsseitig das Signal; des Taktgebers (4) und das mit dem genannten anderen Teiler (3) verbundene signal mit der zu bestimmenden Frequenz empfangend.

4. Anordnung nach Anspruch 3, in der der Taktgeber (4) in den genannten Rechnermitteln (1) integriert ist.

5. Anordnung nach Anspruch 1, in der der genannte andere Teiler (3) eine in Reihe geschaltete Gruppe von Flip-Flops (13) aufweist und deren jeweilige Ausgänge über—Eingänge (12) der genannten Rechnermittel (1) mit den genannten Bestimmungsmitteln (10) verbundenen Pufferregister (11) verbunden sind.

6. Anordnung nach einem der Ansprüche 1 bis 5, in der die Ausgangssignale der beiden Teiler (2, 3) jeweils von zwei Registern empfangen werden, die jedes aus einem Zähler (6, 7) und einem flüchtigen Speicher (8, 9) zusammengesetzt sind.

7. Anordnung nach einem der Ansprüche 1 bis 6, in der die genannten Rechnermittel einen Mikroprozessor (1) aufweisen.

8. Anordnung nach einem der Ansprüche 1 bis 7, in der die Frequenzen der genannten Eingangssignale der genannten Teiler (2, 3) jeweils einem Benzinverbrauch und einer durchfahrenen Strecke entsprechen.

## Claims

1. Device for calculating the ratio between two frequencies of two signals, comprising two frequency dividers (2, 3) receiving the two signals, respectively, and connected to computing means (1) known per se, for working out said ratio and comprising means (10) for determining without error the frequency of the input signal of one (2) of the two dividers from its output signal, device characterized by the fact that it is provided with other means (4, 5) connected between said determination means (10) and the other one (3) of the two dividers, for determining the frequency of the input signal of this other divider (3).

2. Device according to claim 1, wherein said determination means (10) are synchronized with the output signal of said one divider (2), and said other means (4, 5) for determining the frequency of the input signal of said other divider (3) comprise means (4) for determining the phase shift of the input signal of this other divider (3).

3. Device according to claim 2, wherein said other determination means (4, 5) comprise a clock (4) and a gate (5) connected, at the output, to the input of said other divider (3) and receiving, at the input, the signal from the clock (4) and the signal of frequency to be determined associated with said other divider (3).

4. Device according to claim 3, wherein the clock (4) is integrated with said computing means (1).

5. Device according to claim 1, wherein said other divider (3) comprises a group of flip-flops (13) connected in series and whose respective outputs are connected by inputs (12) of said computing means (1) to a buffer register (11) connected to said determination means (10).

6. Device according to anyone of claims 1 to 5, wherein the output signals of the two dividers (2, 3) are received respectively in two registers each formed from a counter (6, 7) and a volatile memory (8, 9).

7. Device according to one of claims 1 to 6, wherein said computing means comprise a microprocessor (1).

8. Device according to one of claims 1 to 7, wherein the frequencies of said input signals of said dividers (2, 3) are representative of a gas consumption and a distance travelled, respectively.

FIG.1

FIG.2